Europäisches Patentamt

European Patent Office

Office européen des brevets

(11) Veröffentlichungsnummer: **0 373 444 B1**

(12) **EUROPÄISCHE PATENTSCHRIFT**

(45) Veröffentlichungstag der Patentschrift :
21.10.92 Patentblatt 92/43

(51) Int. Cl.$^5$: **G01N 27/84**

(21) Anmeldenummer: **89122187.1**

(22) Anmeldetag: **30.11.89**

(54) **Magnetisiervorrichtung.**

(30) Priorität: **12.12.88 DE 3841747**

(43) Veröffentlichungstag der Anmeldung:
**20.06.90 Patentblatt 90/25**

(45) Bekanntmachung des Hinweises auf die
Patenterteilung:
**21.10.92 Patentblatt 92/43**

(84) Benannte Vertragsstaaten:
**ES FR GB IT SE**

(56) Entgegenhaltungen:
**FR-A- 845 863**
**FR-A- 2 471 603**
**MESSEN + PRÜFEN, no. 11, November 1972,**
**pages 701-704; E.A. BECKER: "Die Magnet-**
**pulver-Rissprüfung mit zwei gegeneinander-**
**phasenverschobenen Wechselfeldern"**
**PATENT ABSTRACTS OF JAPAN, vol. 6, no.**
**248 (P-160)[1126], 7th December 1982;& JP-**
**A-57146157**

(73) Patentinhaber: **Tiede GmbH + Co**
**Rissprüfanlagen**
**Bahnhofstr. 94-98 Postfach 53**
**W-7087 Essingen (DE)**

(72) Erfinder: **Goebbels, Klaus, Dr.**
**Amselweg 6**
**W-7087 Essingen (DE)**
Erfinder: **Sendeff, Eduard, Dipl.-Ing.**
**Hahnenbergstrasse 22**
**W-7080 Aalen (DE)**
Erfinder: **Weber, Waldemar**
**Vogelsangerstrasse 123**
**W-5802 Wetter (Ruhr) 02 (DE)**

(74) Vertreter: **Grave, Ivar Gerhard, Dipl.-Phys.**
**Aachener Strasse 321**
**W-5000 Köln 41 (DE)**

EP 0 373 444 B1

## Beschreibung

Die Erfindung betrifft eine Magnetisiervorrichtung in einer Einrichtung zur Prüfung von magnetisierbaren Werkstücken, insbesondere Durchlaufgut in der Form von Brammen, Knüppeln, Stäben, Drähten, Rohren und Profilen, aber auch Einzelteilen, als Prüflinge durch das Magnetpulververfahren auf Oberflächenfehler, insbesondere auf Längsfehler, und Fehler im Bereich der Kanten der Prüflinge, wobei die Magnetisiervorrichtung mit mehreren während des Betriebs stromdurchflossenen und im Werkstück ein Magnetfeld erzeugenden Spulen versehen ist.

Solche Vorrichtungen sind ansich bekannt, vgl. Patent Abstracts of Japan, vol. 6, No. 248 (P-160) [1126], Dezember 1892

Die Erfindung, wie sie in den Ansprüchen gekennzeichnet ist, löst die Aufgabe, eine Magnetisiervorrichtung der eingangs genannten Art zu schaffen, bei der eine vereinfachte Bauweise der Vorrichtung kostensparend erreicht werden soll, aber auch schlechter erfaßbare Oberflächenbereiche des Prüflings in Bezug auf Oberflächenrisse sicherer erfaßt werden.

Die durch die Erfindung erreichten Vorteile sind im wesentlichen darin zu sehen, daß man bei der Herstellung der Prüf-, d.h. Magnetisiervorrichtung, auf handelsübliche, vorgefertigte Bauteilgruppen in Form von fertigen Rotor- bzw. Statorringen, einschließlich der Wicklungen, zurückgreifen kann, trotzdem weitgehend unabhängig von der Form des Prüflings bleibt und seine Kanten besser magnetisieren kann.

Vorteilhafte Ausgestaltungen der Erfindung sind in den Unteransprüchen dargestellt.

Im folgenden wird die Erfindung anhand von lediglich einen Ausführungsweg darstellenden Zeichnungen näher erläutert. Es zeigt

Figur 1 eine Stirnansicht auf eine Statoranordnung der magnetischen Bauteilgruppen mit schematisch gezeigten Prüflingen

Figur 2 eine entsprechende Rotoranordnung, aber mit einem außenliegenden Prüfling

Figur 3 einen aufgeklappten Polträger

Figur 4 eine Seitenansicht zu Figur 3

Figur 5 ein zu Figur 4 bzw. 6 zugeordnetes Strom-Zeitdiagramm und

Figur 6 Einzelheiten einer Anordnung ähnlich der Figur 1.

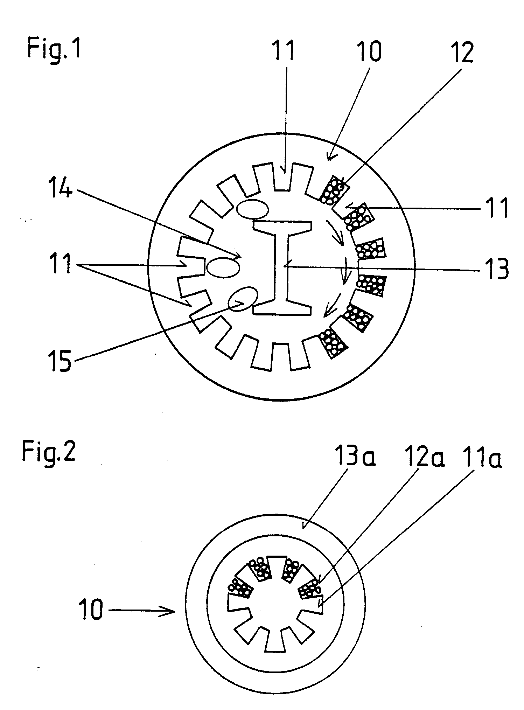

Figur 1 zeigt eine Variante der Erfindung mit der sog. Statoranordnung. Die Magnetisiervorrichtung 10 besteht im wesentlichen aus einem Kranz von Polkernen 11, die umlaufend oder sternförmig in Bezug auf ein innengelegenes Werkstück (dem Prüfling) 13, in diesem Fall einem Doppel-T-Träger, angeordnet sind. Die gezeichnete Form des Werkstückes 13 ist nur beispielhaft sowohl hinsichtlich des Querschnittes als auch des Oberflächenverlaufes. Es können sehr unterschiedliche Werkstücke in Form von Brammen, Knüppeln, Stäben, Drähten, Rohren und Profilen, insbesondere als Durchlaufgut, aber auch Einzelteile, durch die Magnetvorrichtung 10 transportiert werden. Der Verlauf der Feldlinien eines Magnetfeldes 15 ist hier nur rein schematisch angedeutet. Wichtig ist, daß durch diese Magnetisiervorrichtung die Kanten, die gerade beim länglichen Gut relativ große Erstreckung haben, und die sonst durch bekannte Vorrichtungen wegen Streuung des Magnetfeldes an ihnen nur schlecht erfaßbar sind, hier durch mindestens eine gegenüberliegende Polfläche mit hoher Effektivität magnetisierbar sind. Dies gilt besonders, wenn eine relative Drehung zwischen Prüfling und der Magnetisiervorrichtung ggfs. zusätzlich vorgenommen wird.

Eine andere Ausführungsvariante, diesmal als sog. Rotoranordnung, ist der Figur 2 zu entnehmen, wobei diesmal als Beispiel des Prüflings ein Hohlkörper, insbesondere ein Rohr 13a von außen die innengelegene Rotoranordnung umfaßt, die wiederum entsprechende Spulen 12a und entsprechende Polkerne 11a in umlaufender bzw. kreisförmiger Anordnung aufweist. Diese Anordnung eignet sich insbesondere zur Prüfung von Längsinnenfehlern von Werkstücken, hier der Innenfläche des Rohres 13a.

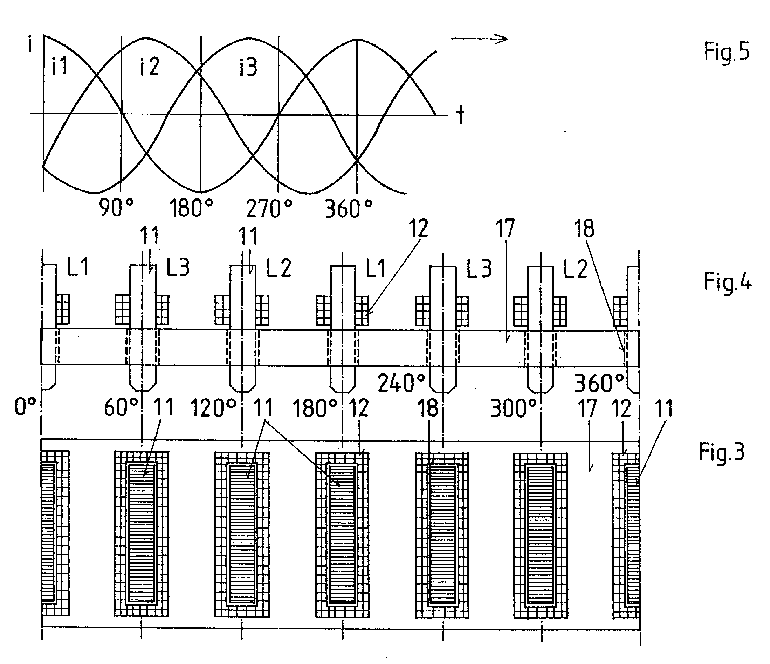

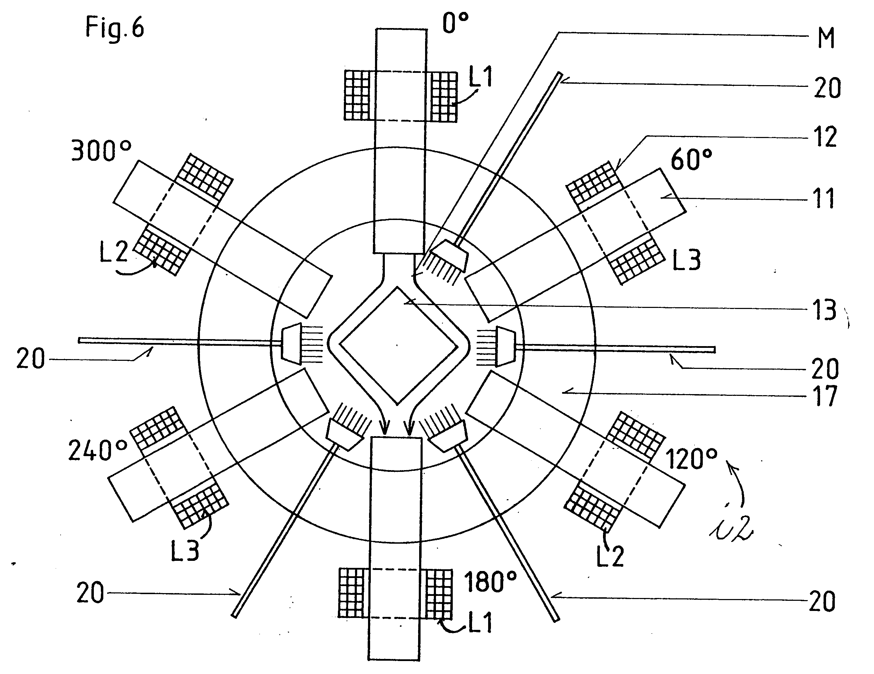

Einzelheiten einer Magnetisiervorrichtung, hier anhand einer Statoranordnung erläutert, sind den Figuren 3-6 zu entnehmen. Die umlaufend angeordneten Polkerne 11 sind in einem zylinderförmigen und nicht ferromagnetischen Polträger 17 befestigt. Als Werkstück 13 ist ein vierkantiger Knüppel oder ein Stab dargestellt. Durch den Polträger 17 hindurch, der einen Teil des Gehäuses der Magnetisiervorrichtung bilden kann, ist eine Mehrzahl von Leitungen 20 hindurchgeführt, die in Düsen bzw. brausenförmigen Sprühköpfen 21 enden und mit Hilfe derer die ansich bekannte Prüfflüssigkeit auf die Oberfläche des Prüflings aufgesprüht wird. Die Prüfflüssigkeit enthält durch das Magnetfeld M magnetisierbare Partikelchen und je nach Einzelfall Zusätze wie Rostinhibitoren udgl. Sprühköpfe und/oder Sprühleitungen können radial verstellbar angeordnet sein, so daß eine optimale Anpassung an die Oberfläche des Prüflings erfolgt, der je nach Einzelfall unterschiedlichen Durchmesser haben kann. Eine hinreichende Besprühung der Kanten im Ausführungsbeispiel Figur 6, oder der sonstigen Vorsprünge udgl. bei anderen Prüflingen kann durch die einstellbaren Leitungen bzw. durch Sprühköpfe 21 sichergestellt werden.

Dem aufgeklappten Polträger gemäß Figur 3 bzw. der um 90° umgeklappten Ansicht der Figur 4 ist die Anordnung der Polkerne 11 und der Spulen 12 vollständiger zu entnehmen, wobei zur Differenzierung ihrer Anordnung zweckmäßigerweise die Spulen außerdem mit L1 - L3 dargestellt sind und sowohl in Figur 3 als auch 4 sowie in Figur 6 ihre entsprechende räumliche Anordnung in Winkelgraden angegeben ist. Die Spule L1 hat die Winkelanordnung 0° und 180°, die Spule L2 --- 120° und 300°, die Spule L3 -- 60° und 240°, gesehen im Uhrzeigersinn der Figur 6. Die zugehörige Anordnung und Bezeichnung der Spulen L1, L3, L2; L1, L3, L2 ist linear in Figur 4 aufgetragen mit zugehörigem Verlauf der Winkelgrade, wobei eine entsprechende Wiederholung in Figur 3 nicht mehr angegeben ist, sondern dort lediglich die zugehörigen Polkerne 11 und Spulen 12 generell bezeichnet sind. In Figur 3 als auch Figur 4 ist im einzelnen der jeweilige Führungsschlitz 18 zwischen dem nicht magnetischen Polträger 17 und der Außenoberfläche des jeweiligen Polkernes 11 dargestellt. In Bezug auf den jeweiligen Prüfling 13 sind also die Polkerne radial einstellbar, um sie optimal in Bezug auf die Oberfläche des jeweiligen Prüflings zu justieren. Dies schließt ebenfalls ein, daß bei Einzelteilen oder unsymmetrischen Prüflingen die radiale Einstellung der einzelnen Polkerne 11 unterschiedlich sein kann. Einen zugehörigen möglichen Stromverlauf in den Spulen L für einen Strom i, wobei die Indices 1, 2, 3 die Zugehörigkeit bezeichnen, ist in Abhängigkeit von der Zeit t in dieser Figur 5 dargestellt.

Durch die Erfindung werden verschiedene Vorteile bei der Prüfung von magnetisierbaren Werkstücken, insbesondere länglichem Durchlauf, erreicht. Man kann eine optimale Prüfgeschwindigkeit einstellen, abgestimmt auf den jeweiligen Prüfling. Die Oberflächenfehler oder Risse eines Prüflings werden lückenlos über den ganzen Umfang hinweg zuverlässiger als bisher erfaßt. Es werden auch schlechter erfaßbare Oberflächenbereiche, Kanten und Vorsprünge durch die Polgruppen 11 sicherer als bisher erfaßt, und zwar unabhängig von der Länge des Prüflings oder Anzahl der Kanten, die bei Stahlprofilkörpern in einer Vielzahl vorliegen können. Diese Vorteile werden sowohl bei einem massiven Prüfling als auch bei Prüflingen, die Hohlkörper sind, erreicht.

Durch eine Magnetisiervorrichtung in Statoranordnung und einer weiteren dahinter linear angeordneten Magnetisiervorrichtung in Rotoranordnung kann man bei Durchlaufgut ohne Zeitverlust bei Hohlkörpern sowohl die Außenoberfläche als auch die Innenoberfläche, oder in umgekehrter Reihenfolge, auf Risse udgl. kontinuierlich prüfen. Ein weiterer Vorteil ist, daß man die Magnetisiervorrichtung nach dem Stator- bzw. Rotorprinzip durch Einsatz von aus der Elektrotechnik bekannten Bauteilen oder ganzen Bauteilgruppen in Form von fertigen Rotor- bzw. Statorringen mit zugehörigen Polen und Wicklungen verwenden kann, so daß auch der Vorteil der Kostenersparnis eintritt. Man ist von der Art des Prüfobjektes weitgehend unabhängig.

Je nach Einzelfall ist man nicht nur auf die Prüfung von Längsfehlern beschränkt. Man kann vorteilhaft, insbesondere bei einer Statoranordnung nach Figur 1 bzw. Figur 6 und einem größeren radialen Abstand der Polgruppen zueinander eine Einstell- und Lagervorrichtung für die Prüflinge 13, insbesondere Einzelteile, vorsehen, die es ermöglicht, den oder die Prüflinge geeignet zu verstellen, d.h. in Bezug auf die Polkerne 11 auszurichten. Hierdurch ist man in der Lage, ebenfalls solche Fehler zu erfassen, die nicht eine ausgesprochene Längsrichtung haben. Diese Zusatzeinrichtung kann Bauteile wie Verstellglieder, Greifarme udgl. aufweisen, die den Prüfling verschwenken oder rotieren. Die Anordnung kann auch so vorgesehen sein, daß sie in dem ersten Durchlauf den Prüfling auf die Längsfehler und in einem zweiten Durchlauf, nach erfolgter Neuorientierung des Prüflings 13 odgl. in Bezug auf die Polkerne 11 dieser auf andere Oberflächenrisse, auch Querrisse, geprüft werden kann. Für den ersten und zweiten Durchlauf können auch eine erste Magnetisiervorrichtung 10 und eine zweite dahinter geschaltete weitere Magnetisiervorrichtung, je nach Einzelfall, verwendet werden.

## Patentansprüche

1. Magnetisiervorrichtung in einer Einrichtung zur Prüfung von magnetisierbaren Werkstücken (13, 13a), insbesondere Durchlaufgut in der Form von Brammen, Knüppeln, Stäben, Drähten, Rohren und Profilen, aber auch Einzelteilen, als Prüflinge durch das Magnetpulververfahren auf Oberflächenfehler, insbesondere auf Längsfehler und Fehler im Bereich der Kanten der Prüflinge, wobei die Magnetisiervorrichtung (10) mit mehreren während des Betriebs stromdurchflossenen und im Werkstück (13) ein Magnetfeld (15) erzeugenden Spulen (12, 12a) versehen ist, dadurch gekennzeichnet, daß die Vorrichtung nach Art eines Stators bzw. Rotors bei Elektromotoren oder Generatoren eine Gruppe von Bauteilen, bestehend aus einer Vielzahl von zu ihrer Längsachse umlaufend oder sternförmig angeordneten ferromagnetischen Polkernen (11 bzw. 11a) als auch auf diese aufgebrachten Spulen (12 bzw. 12a) aufweist, durch welche ein innengelegenes Werkstück (13) umfaßbar ist bzw. welche von einem außengelegenen Werkstück (13a) umfaßbar sind und durch diese Bauteilgruppe (11, 11a; 12, 12a) ein, vorzugsweise umlaufendes, auf die Werkstückoberfläche einwirkendes Magnetfeld (15) berührungslos erzeugbar ist.

2. Magnetisiervorrichtung nach Anspruch 1, dadurch gekennzeichnet, daß sie zusätzlich mit einer Einstell- und Lagervorrichtung versehen ist, durch die der Prüfling (13, 13a) relativ zu den jeweils aufgebrachten Spulen (12, 12a) tragenden Polkernen (11, 11a) oder umgekehrt, verstellbar ist.

## Claims

1. Apparatus for magnetizing, incorporated in a device for testing magnetizable workpieces (13, 13a), especially for transit material, having the shape of iron slabs, billets, bars, wires, tubes and profiles, but single pieces also, applied as test pieces in a magnetic powder process for testing surface defects, especially longitudinal cracks and cracks in the area of test piece edges, whereat the magnetizing device (10) is provided with a number of coils (12, 12a), which create a magnetic field (15) in the workpiece (13) when current is passed through them during testing, characterized in
that following the kind of a stator or rotor, respectively, in electrical motors or generators, one group of elements will comprise a multitude of ferromagnetic pole cores (11 or 11a), arranged peripherally or in a star type configuration to the longitudinal axis of the device and provided as well on them with coils (12 or 12a) on behalf of which a work piece (13), arranged inside, can be envelopped or the coils can be enveloped on behalf of a workpiece (13a), arranged outside and on behalf of said group of elements (11, 11a; 12, 12a) a magnetic field (15), preferably a pheripheral one, can be created free of contact, which will influence the surface of the workpiece.

2. Apparatus for magnetizing according to claim 1, characterized in that it is additionally provided with an adjusting and embedding device in order to move the test piece (13, 13a) in respect to the pole cores (11, 11a), or vice versa, which cores are each provided with coils (12, 12a).

## Revendications

1. Dispositif d'aimantation dans un instrument de contrôle de pièces aimantables (13, 13a), notamment des pièces de passage telles que brames, billettes, barres, fils, tubes et profils, mais aussi de pièces individuelles, comme éprouvettes à l'aide de l'essai par poudre magnétique pour détecter des défauts de surface, surtout des défauts en direction longitudinale et des défauts aux bords des éprouvettes, le dispositif d'aimantation (10) étant muni de plusieurs bobines (12, 12a) qui sont parcourues par le courant quand le dispositif est en marche et créent un champ magnétique (15) dans la pièce (13), caractérisé en ce que le dispositif est équipé, comme un stator ou pour les moteurs électriques ou générateurs un rotor, d'un groupe de composantes composé d'une multitude de noyaux polaires (11 ou 11a) ferromagnétiques disposés autour leur axe longitudinal ou en étoile et de bobines (12 ou 12a) montées sur ces noyaux, qui permettent d'entourer une pièce (13) déposée à l'intérieur ou qui peuvent être entourées par une pièce (13a) déposée à l'extérieur, et en ce que ce groupe de composantes (11, 11 a; 12, 12a) permet de créer un champ magnétique (15) sans contact, de préférence tournant, qui agit sur la surface de la pièce.

2. Dispositif d'aimantation selon la revendication 1, caractérisé en ce qu'il est équipé d'un dispositif de réglage et de support complémentaire qui permet le réglage de la position de l'éprouvette (13, 13a) par rapport aux noyaux polaires (11, 11a) portant les bobines (12, 12a) ou vice-versa.

Fig.1

11   10   12

14

11

15

11

13

Fig.2

13a   12a   11a

10

Fig.5

Fig.4

Fig.3

EP 0 373 444 B1

Fig.6